# EUROPEAN PATENT SPECIFICATION

(11) **EP 4 245 146 B1**
(45) Date of publication and mention of the grant of the patent: **27.05.2026**
(21) Application number: 23161409.0
(22) Date of filing: 13.03.2023
(51) Int. Cl.: A21C 11/00

(54) **DEVICE FOR FORMING PIZZA BASES**
VORRICHTUNG ZUM FORMEN VON PIZZABÖDEN
DISPOSITIF POUR FORMER DES FONDS DE PIZZA

(30) Priority: 17.03.2022 IT 202200005207
(43) Date of publication of application: 20.09.2023
(73) Proprietor: Minipan S.r.l., 48024 Massa Lombarda (RA) (IT)
(72) Inventor: LANDI, Alessandro, 48012 BAGNACAVALLO RA (IT)
(74) Representative: Modiano, Micaela Nadia

(56) References cited:
- EP-A1- 0 906 725
- EP-A1- 1 129 621
- US-A- 4 514 089

## Description

The present invention relates to a device for forming pizza bases.

The definition "pizza base" is understood to mean the spread lower layer constituted by a quantity of dough generally of flour, water and yeast, on which the appropriate fillings will be placed.

In pizzerias it is generally the pizza maker who rolls out the dough, giving it a disk-like shape, whereas at the industrial level this is achieved by means of rollers or pressers.

EP 1 129 621 A1 discloses a device for forming pizza bases.

Unfortunately, by adopting rollers or pressers according to the background art it is not possible to provide pizza bases of the type corresponding to the "Neapolitan pizza," in which the base comprises a very thick perimetric crust that is highly appreciated from an organoleptic point of view in addition to being very effective for confining the filling.

It would seem theoretically possible to adopt a presser having an end plate with a diameter that is smaller than the diameter of the pizza base to be provided, which could apply a pressure on the dough so that part of it flows outside the edge of the end plate, creating a perimetric ring of dough that is thicker than the part of the dough below the plate.

However, it should be specified that doughs, particularly those that are scarcely hydrated, would tend to contract elastically once the pressure of the plate is removed, due to the mechanical reaction brought about by the gluten chains. The result would therefore be poor.

The term hydration of a quantity of dough is understood to mean the ratio between the amount of water and the amount of flour, generally expressed as a percentage: doughs in which the percentage of hydration is greater than 55% (reaching even 90%) are considered highly hydrated; on the other hand, doughs in which such percentage is lower than 50% are to be considered scarcely hydrated.

On the other hand, if one attempted to apply pressure by means of a presser having an end plate having a diameter that is smaller than the diameter of the pizza base to be provided on a highly hydrated dough, phenomena of adhesion of the dough to the plate and an overall reduction in the quality of the provided base (mainly from an organoleptic and mechanical cohesion standpoint) would occur.

For this reason, currently in industrial units for producing high-quality pizza bases there is an area where operators act manually on the dough, giving it the necessary shape.

Obviously, the presence of labor results in a considerable increase in production costs and ties productivity to the number of operators provided (therefore, to have high productivity it is necessary to resort to numerous operators).

The aim of the present invention is to solve the problems described above, providing a device for forming pizza bases suitable for the industrial production of bases provided with a perimetric crust with high thickness, corresponding to the standards of Neapolitan pizza.

Within this aim, an object of the invention is to provide a device for forming pizza bases that can operate on highly hydrated doughs.

Another object of the invention is to provide a device for forming pizza bases that does not require manual intervention on the dough on the part of specific operators.

Another object of the invention is to provide a device for forming pizza bases having high productivity.

Another object of the invention is to provide a device for forming pizza bases with low operating costs.

A further object of the present invention is to provide a device for forming pizza bases that has low costs, is relatively easy to provide in practice and of assured application.

This aim and these and other objects that will become more apparent hereinafter are achieved by a device for forming pizza bases of the type comprising at least one supporting surface on which a predefined quantity of dough can be accommodated, at least one surface surmounted by a respective supporting frame for at least one pusher designed to flatten said quantity of dough and to spread it, characterized in that said pusher comprises a presser plate constituted by a substantially planar central body, with a footprint having a transverse dimension of less than 150 mm, to which the vertices of at least two contiguous radial laminas are hinged, their outer edges forming a contour which substantially corresponds to that of the pizza to be provided, between said frame and said pusher there being interposed at least one central actuator, configured for the vertical translation of said central body between a first configuration of maximum distance from said supporting surface and a second configuration of minimum distance from said supporting surface, and at least two external actuators, configured for the vertical translation of the outer edge of a respective lamina between a first arrangement of maximum distance from said supporting surface and a second arrangement of minimum distance from said supporting surface.

Further characteristics and advantages of the invention will become better apparent from the description of a preferred but not exclusive embodiment of the device for forming pizza bases, illustrated by way of non-limiting example in the accompanying drawings, wherein:

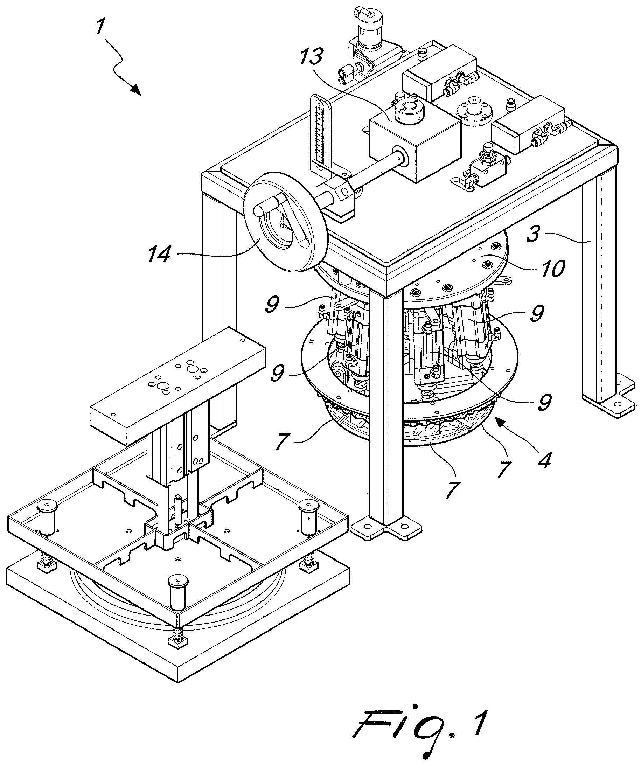

Figure 1 is a schematic perspective view of a possible embodiment of device for forming pizza bases according to the invention;

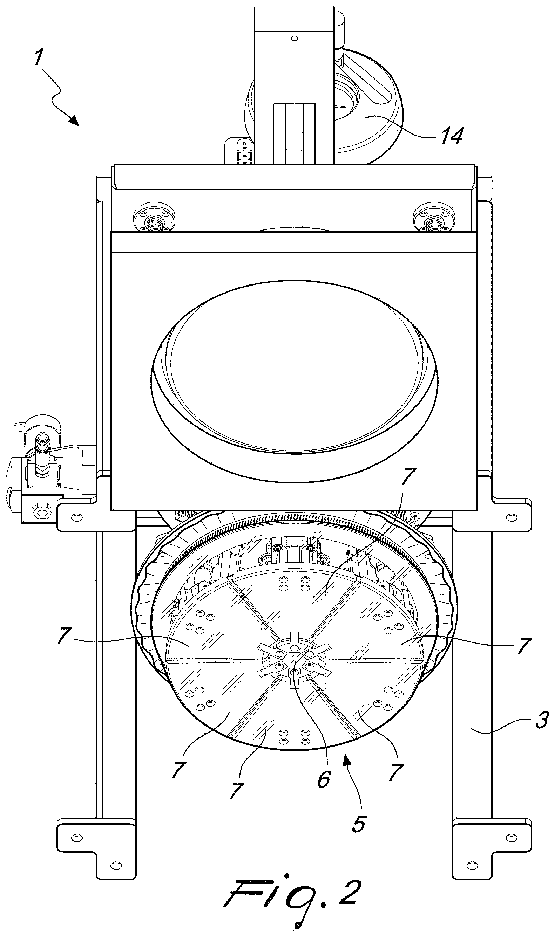

Figure 2 is a schematic perspective bottom view of the device of Figure 1;
Figure 3 is a schematic side view of the device of Figure 1 in a first inactive configuration;
Figure 4 is a schematic side view of the device of Figure 1 in a second active configuration for the partial compression of a predefined quantity of dough;
Figure 5 is a schematic side view of the device of Figure 1 in a third active configuration for the complete compression of a predefined quantity of dough;
Figure 6 is a schematic sectional side view of the device of Figure 1 in the first inactive configuration;
Figure 7 is a schematic sectional side view of the device of Figure 1 in the second active configuration for the partial compression of a predefined quantity of dough;
Figure 8 is a schematic side view of the device of Figure 1 in a third active configuration for the complete compression of a predefined quantity of dough;
Figure 9 is a schematic side view of the device of Figure 1 in a fourth passive configuration in which the predefined quantity of dough is spread and completely shaped.

With reference to the figures, a device for forming pizza bases A is generally designated by the reference numeral 1.

The device 1 according to the invention comprises at least one supporting surface on which a predefined quantity of dough B can be accommodated.

Such supporting surface 2 is surmounted by a respective supporting frame 3 for at least one pusher 4 designed to flatten the quantity of dough B and to spread it.

Advantageously, the pusher 4 comprises, according to the invention, a presser plate 5 constituted by a substantially planar central body 6, with a footprint having a transverse dimension of less than 150 mm, to which the vertices of at least two contiguous radial laminas 7 are hinged, their outer edges forming a contour which substantially corresponds to that of the pizza A to be provided.

Respective means for moving the presser plate 5 are interposed between the frame 3 and the pusher 4.

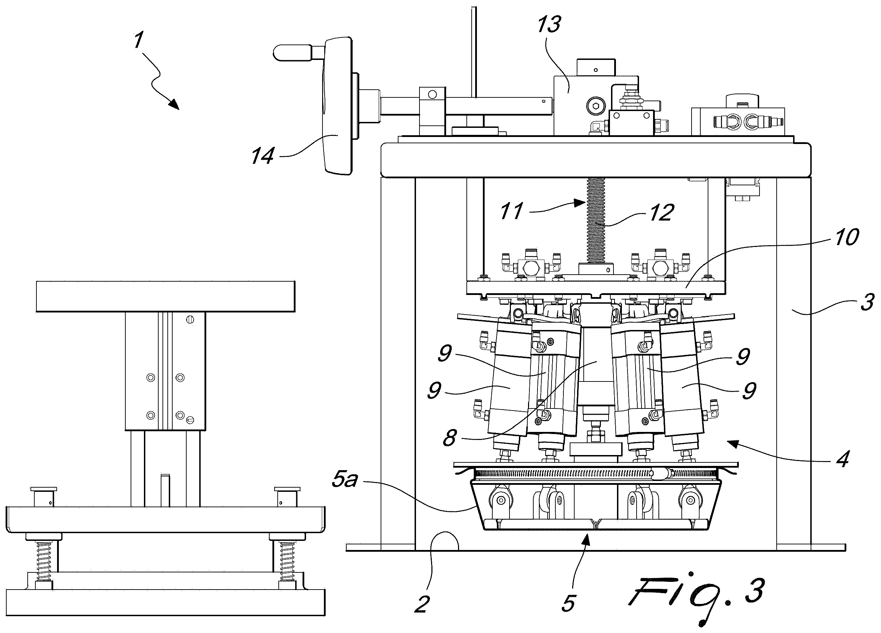

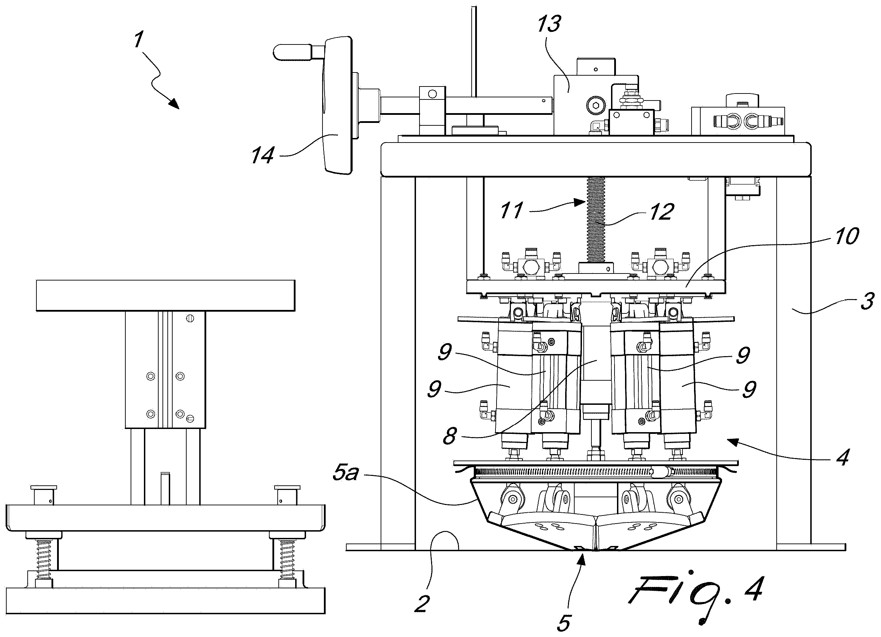

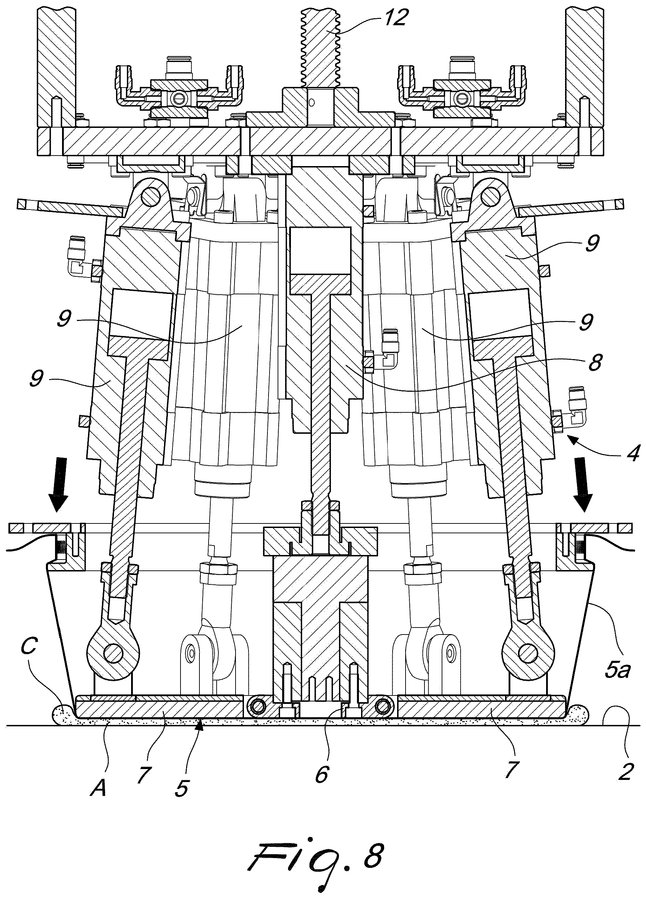

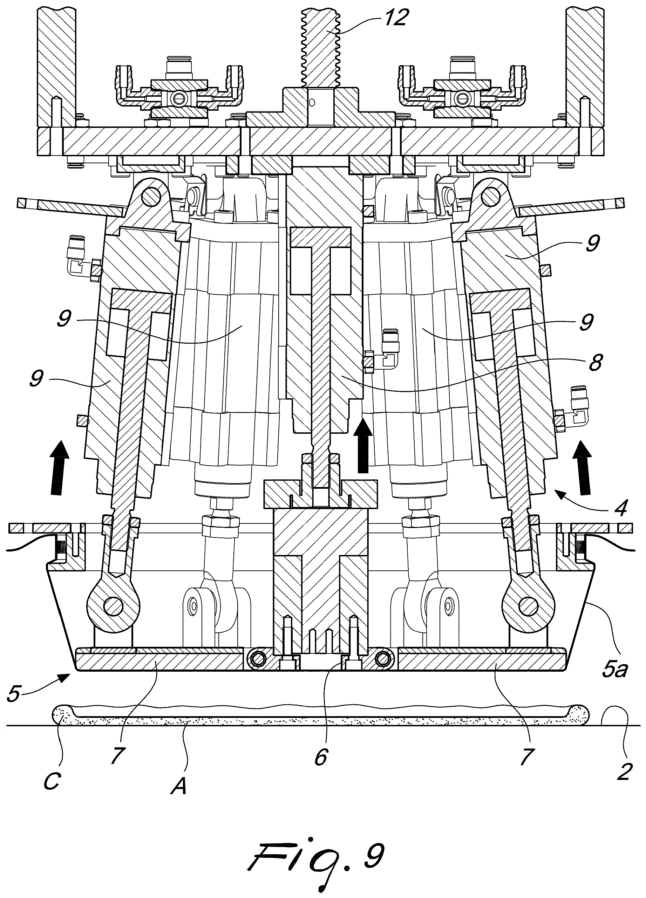

In particular, at least one central actuator 8, configured for the vertical translation of the central body 6 between a first configuration of maximum distance from the supporting surface (shown by way of non-limiting example in the accompanying Figures 3, 6 and 9) and a second configuration of minimum distance from the supporting surface 2 (shown by way of non-limiting example in the accompanying Figures 4 and 8), is conveniently present.

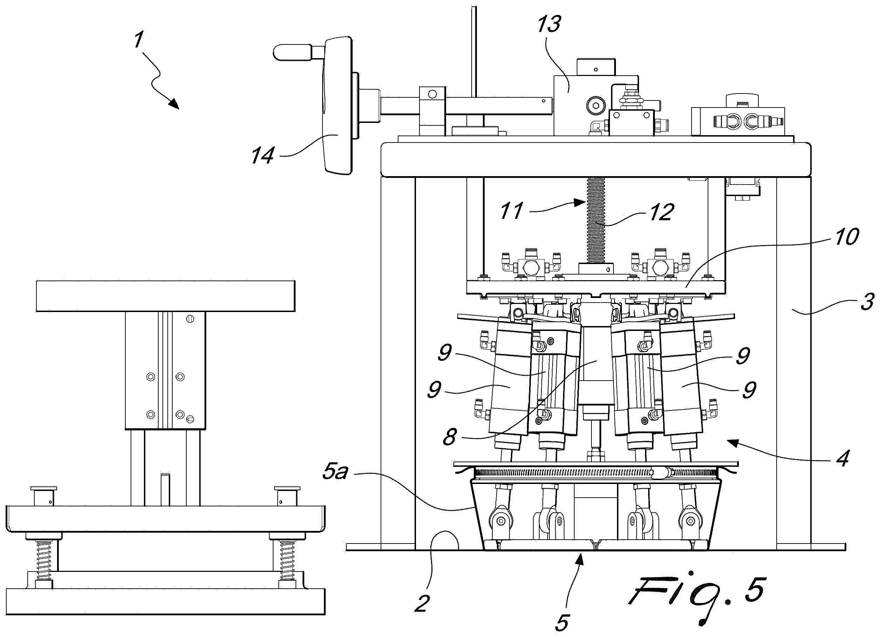

Moreover, at least two external actuators 9, configured for the vertical translation of the outer edge of a respective lamina 7 between a first arrangement of maximum distance from the supporting surface 2 (shown by way of non-limiting example in the accompanying Figures 3, 4, 6, 7 and 9) and a second arrangement of minimum distance from the supporting surface (shown by way of non-limiting example in the accompanying Figures 5 and 8) are positively present.

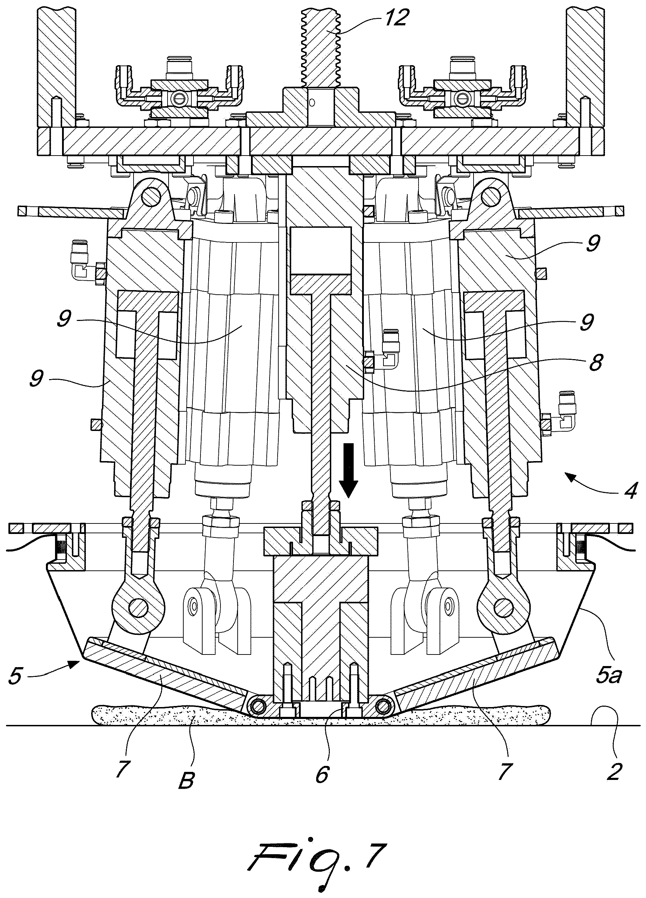

It should be specified that upon an arrangement of the actuators 8 and 9 that entails that the central body 6 is in the second configuration of minimum distance from the supporting surface 2 and that the laminas 7 are partially arranged at the maximum distance from the supporting surface 2 (in accordance with what is shown by way of non-limiting example in Figures 4 and 7), traction of the portions of the laminas 7 hinged to the central body 6 will occur and will determine an inclination of said laminas 7 with respect to their initial position.

It is specified that according to the invention it is possible to advantageously provide that the radial and contiguous laminas 7 are a plurality (merely by way of non-limiting example, it is specified that in the accompanying figures, provided by way of non-limiting illustration, the possibility to use six laminas 7 is provided for).

The laminas 7 may be mutually identical or may have different shapes and dimensions, in accordance with specific provision requirements.

It is specified that with reference to an embodiment of unquestionable interest in practice and in application, the substantially planar central body 6 can favorably have a substantially circular shape.

In this case, the at least two contiguous radial laminas 7 are advantageously shaped like circular sectors having an outside diameter that substantially corresponds to the diameter of the internal part of the pizza base A to be provided.

Such internal part of the pizza A to be provided is positively delimited by a crust of dough C having a perimetric arrangement.

It is specified that the device 1 according to the invention comprises a covering sheath 5a for the central body 6 and the at least two radial laminas 7 (i.e., to cover the presser plate 5): the face of said sheath 5a that is directed outward is suitable to abut against the predefined quantity of dough B. In this manner, when the presser plate 5 flattens the dough B the pressure applied is distributed uniformly through the covering sheath 5a, preventing traces of the regions of discontinuity present between the central body 6 and the at least two radial laminas 7 from being imprinted on the pizza base A being provided. Such traces, in fact, would have an unpleasant impact, since they would point out the industrial origin of the base A: by virtue of the coating sheath 5a, a pizza base A having an appearance very similar to that of a handmade pizza base is therefore obtained.

In order to identify possible embodiments of the device 1 according to the invention, it is specified that the at least one central actuator 8 and the at least two external actuators 9 may advantageously be of a type chosen preferably between pneumatic cylinders, hydraulic cylinders, electrically actuated movement means and combinations thereof.

The accompanying figures show, merely by way of non-limiting example, an embodiment in which the actuators 8 and 9 are constituted by pneumatic cylinders connected to a respective compressed air circuit.

The adoption of pneumatic cylinders is particularly valid for the present application in relation to the fact that the compressibility of the air in the cylinder allows elastic adjustments of the position of its stem and, consequently, of the position of the central body 6 and of the at least two radial laminas 7 as a function of the hardness of the dough B, ensuring therefore that the compression is applied in the most even and progressive possible manner to said dough B.

It is specified that the device 1 according to the invention is particularly suitable for processing a quantity of dough B of the type with high hydration, i.e., comprising a quantity of water, with respect to the flour, equal to at least 55% by weight, preferably greater than 65% by weight.

The quantity of water present in a high hydration dough depends by the degree of absorption of the flour. Therefore, based on the "strength" of the flour and on the presence or not of bran, absorptions generally vary from 55% to 62%.

The more the water introduced in the high hydration dough, the greater the evaporation during baking, and therefore a greater "expansion" of said dough will be observed.

The finished product (after baking) is light, soft and voluminous.

It is noted that this type of high hydration doughs cannot usually be managed by means of roller units or monolithic pressers of the known type. The device 1 according to the invention allows to operate on predefined quantities of said type of dough B without any production issues arising.

It is specified that the pusher 4 is rigidly coupled to a panel 10 which is coupled to the frame 3 by virtue of means 11 for adjusting its position, at least in elevation, with respect to the at least one supporting surface 2 on which a predefined quantity of dough B can be accommodated.

The adjusting means 11 might preferably be constituted by a screw 12 which can be actuated by virtue of a gearbox 13, which can be actuated in turn by virtue of a control motor or by means of a handwheel 14 which can be actuated manually by the operator in order to adjust the position of the panel 10 (and, consequently, the distance of the presser plate 5 from the surface 2).

Obviously, the adjustment of the position of the panel can be performed by means of specific automatic actuators (also according to methods of embodiment of a known type, provided for similar adjustments).

It is specified that the presser plate 5 of the pusher 4 has a footprint that has a transverse dimension smaller than 1000 mm, preferably smaller than 500 mm.

Such transverse footprint is defined by the outer perimetric edge of the at least two contiguous radial laminas 7.

It is specified that if predefined quantities of dough B having a weight comprised between 200 and 280 g are used, and if one intends to provide a pizza base A with a circular shape, its diameter is preferably comprised between 220 mm and 350 mm (including the perimetric crust C).

Of course, for specific applications, it is not excluded to provide pizza bases A having a larger diameter, in accordance with the general dimensional indications given previously.

The present invention extends its protection also to a method for forming pizza bases A by means of a device 1 of the type described above, which provides for the execution of a series of consecutive operating steps.

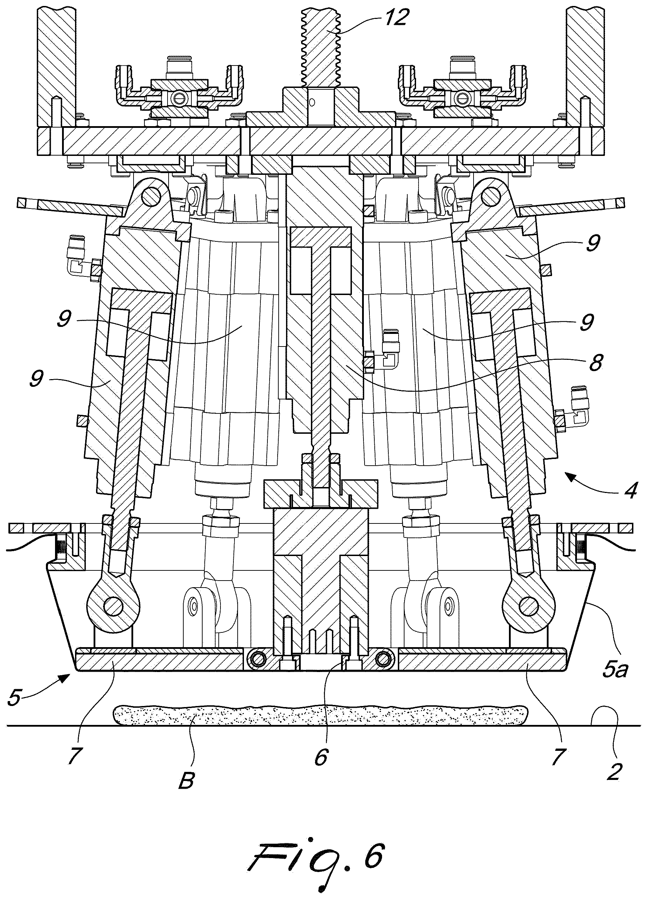

During a first step it is necessary to arrange a predefined quantity of dough B on the at least one supporting surface 2 (as shown by way of non-limiting example in the accompanying Figure 6).

Subsequently, in a second step, it is necessary to actuate the at least one central actuator 8 for the translation of the substantially planar central body 6 toward the surface 2, with consequent compression of a central portion of the predefined quantity of dough B until it is brought to a set thickness.

During this second step, the regions that are contiguous to the central portion of the dough B are also subjected to a compression which decreases progressively away from the central body 6 by virtue of the action of portions of the laminas 7 which are proximate to the central body 6 (as shown by way non-limiting example in the accompanying Figure 7).

A third step actuates the external actuators 9 for the rotation of the laminas 7 toward the surface 2, with consequent compression of external portions of the predefined quantity of dough B until it is brought to a set thickness.

This compression produces an outflow of dough beyond the perimetric edge of the presser plate 5 which is intended to form a crust C of dough which is arranged perimetrically (as shown in Figure 8).

Therefore, it is sufficient to make the stems of the actuators 8 and 9 retract in order to move the presser plate away from the surface 2, obtaining a pizza base A that is appropriately shaped.

It is specified that the dough B to be arranged on the surface 2 during the first step is of the high hydration type, comprising a quantity of water, with respect to the flour, equal to at least 55% by weight, preferably greater than 65% by weight.

It is noted that this type of dough cannot normally be managed by means of roller units or monolithic pressers of the known type. The device 1 according to the invention allows instead to perform the teachings of the method according to the invention without any production issues arising.

The present invention extends its protection also to a unit for making pizzas, of the type comprising at least one mixer for providing a food dough B, at least one assembly for dividing the dough B into predefined distinct quantities, at least one apparatus for the transfer of said predefined quantities of dough B, at least one station for the distribution of specific fillings on a pizza base A obtained by shaping and spreading the predefined quantity of dough B and a thermal treatment assembly chosen between an oven (if the pizza must be subjected to baking or precooking), a blast chiller (if the pizza must be frozen), a freezer (if the pizza must be frozen), and the like.

In particular, it is specified that the adoption of precooking (or complete cooking) and freezing of the finished product is not excluded.

Such unit according to the invention comprises, interposed between the at least one apparatus for the transfer of the predefined quantities of dough B and of the at least one station for the distribution of specific fillings on a pizza base A, a device 1 of the type described earlier.

Advantageously, the present invention solves the problems described above by providing a device 1 for forming pizza bases A that is suitable for the industrial production of bases A provided with a perimetric crust C with high thickness, which corresponds to the standards of Neapolitan pizza.

Conveniently, the device 1 according to the invention can operate on highly hydrated doughs B.

Advantageously, the device 1 according to the invention does not require manual intervention on the dough B by specific operators.

Favorably, the device 1 according to the invention ensures high productivity, since it automates completely the forming of the base A.

Positively, the device 1 according to the invention ensures low operating costs, due indeed to the complete automation of its operation.

Validly, the device 1 according to the invention is relatively easy to provide in practice and low in cost: these characteristics make the device 1 according to the invention an innovation of assured application.

The invention thus conceived is susceptible of numerous modifications and variations, all of which are within the scope of the appended claims; all the details may furthermore be replaced with other technically equivalent elements.

In the accompanying figures, next to the device 1, it is possible to see a compression apparatus that can be used in sequence with the device 1 or as an alternative thereto.

Such apparatus provides for the presence of a seat (having a circular shape in the accompanying figures) within which the predefined quantity of dough B (or, possibly, even the pizza base A already formed with the device 1) can be inserted. By means of a compression disk (having a smaller diameter than the seat), it is possible to apply a spreading of the dough B (or of the pizza base A), ensuring the forming (or the permanence) of a crust C between the edge of the disk and the edge of the seat.

The compression apparatus, if combined with the device 1, could be useful to give an initial flattened shape to the dough B, so that a precise shaping of the pizza base A is then possible by means of the subsequent device 1; as an alternative, the compression apparatus might also be arranged downstream of the device 1 to block any phenomena of elastic return of the provided pizza base A (the elastic effect of the gluten chains might be such as to cause neckings and dimensional contractions to the provided base A, and therefore a subsequent compression might help to stabilize its shape and dimensions).

If the compression apparatus is used independently of the device 1, it will be considered suitable for forming pizza bases A.

In the embodiments shown, individual characteristics, given in relation to specific examples, may actually be interchanged with other different characteristics that exist in other embodiments.

In practice, the materials used, as well as the dimensions, may be any according to the requirements and the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A device for forming pizza bases (A) of the type comprising at least one supporting surface (2) on which a predefined quantity of dough (B) can be accommodated, at least one surface (2) surmounted by a respective supporting frame (3) for at least one pusher (4) designed to flatten said quantity of dough (B) and to spread it, said pusher (4) comprising a presser plate (5), comprising a covering sheath (5a) for said presser plate (5) with the face of said sheath (5a) that is directed outward being suitable to abut against the predefined quantity of said dough (B), and which is constituted by a substantially planar central body (6), with a footprint having a transverse dimension of less than 150 mm, to which the vertices of at least two contiguous radial laminas (7) are hinged, their outer edges forming a contour which substantially corresponds to that of the pizza base (A) to be provided, between said frame (3) and said pusher (4) there being interposed at least one central actuator (8), configured for the vertical translation of said central body (6) between a first configuration of maximum distance from said supporting surface (2) and a second configuration of minimum distance from said supporting surface (2), and at least two external actuators (9), configured for the vertical translation of the outer edge of a respective lamina (7) between a first arrangement of maximum distance from said supporting surface (2) and a second arrangement of minimum distance from said supporting surface (2).

2. The device according to claim 1, **characterized in that** said contiguous radial laminas (7) are a plurality.

3. The device according to one or more of the preceding claims, **characterized in that** said substantially planar central body (6) has a substantially circular contour, said at least two contiguous radial laminas (7) being shaped like circular sectors which have an outside diameter that corresponds to the diameter of the internal part of the pizza base (A) to be provided, delimited by a perimetric crust of dough (C).

4. The device according to claim 1, **characterized in that** said at least one central actuator (8) and said at least two external actuators (9) are of a type chosen preferably between pneumatic cylinders, hydraulic cylinders, electrically actuated movement means and combinations thereof.

5. The device according to one or more of the preceding claims, **characterized in that** said pusher (4) is rigidly coupled to a panel (10) which is coupled to said frame (3) by virtue of means (11) for adjusting a position of the panel, at least in elevation, with respect to the at least one supporting surface (2) on which a predefined quantity of dough (B) can be accommodated.

6. The device according to one or more of the preceding claims, **characterized in that** said pusher (4) has a footprint the transverse dimension of which is smaller than 1000 mm, preferably smaller than 500 mm, said transverse footprint being defined by the outer perimetric edge of said at least two contiguous radial laminas (7).

7. A method for forming pizza bases (B) which consists in adopting a device (1) according to one or more of the preceding claims and in performing the following steps:
- arranging a predefined quantity of dough (B) on the at least one supporting surface;
- actuating said at least one central actuator (8) for a translation of said substantially planar central body (6) toward said surface (2), with consequent compression of a central portion of said predefined quantity of dough (B) until said predefined quantity of dough is brought to a set thickness, regions that are contiguous to said central portion of said dough (B) being subjected to a compression which decreases progressively away from said central body (6) by virtue of an action of portions of said laminas (7) which are proximate to said central body (6) and are hinged thereto;
- actuating said external actuators (9) for the rotation of said laminas (7) toward said surface (2), with consequent compression of external portions of said predefined quantity of dough (B) until it is brought to a set thickness, producing an outflow of dough beyond the perimetric edge of said presser plate (5) which is intended to form a crust (C) of dough which is arranged perimetrically to the base (A).

8. The method according to claim 7, **characterized in that** said dough (B) is of the type with high hydration, comprising a quantity of water, with respect to the flour, equal to at least 55% by weight, preferably greater than 65% by weight.

9. A unit for making pizzas, of the type comprising at least one mixer for providing a food dough (B), at least one assembly for dividing said dough (B) into predefined distinct quantities, at least one apparatus for the transfer of said predefined quantities of dough (B), at least one station for the distribution of specific fillings on pizza bases (A) obtained from said predefined quantities of dough (B) and a thermal treatment assembly chosen between an oven, a blast chiller, a freezer and the like, **characterized in that** it comprises, interposed between said at least one transfer apparatus and said at least one filling distribution station, a device (1) according to at least one of claims 1 to 6.

## Patentansprüche

1. Eine Vorrichtung zum Formen von Pizzaböden (A) von der Art, die mindestens eine tragende Oberfläche (2) umfasst, auf die eine vordefinierte Menge an Teig (B) aufgetragen werden kann, mindestens eine Oberfläche (2), die von einem entsprechenden Tragrahmen (3) für mindestens einen Schieber (4) überragt ist, der dazu dient, die Menge an Teig flacher zu machen und zu verbreitern; wobei der Schieber (4) eine Druckplatte (5) umfasst, die eine Abdeckhülse (5a) für die Druckplatte (5) umfasst, wobei die nach außen gerichtete Seite der Hülse (5a) geeignet ist, an der vordefinierten Menge an Teig (B) anzuliegen, und die aus einem im Wesentlichen planaren zentralen Körper (6) mit einer Aufstandsfläche besteht, die ein Quermaß von weniger als 150 mm hat und an der die Scheitelpunkte von mindestens zwei benachbarten radialen Plättchen (7) gelenkig angebracht sind, wobei ihre Außenkanten eine Kontur bilden, die im Wesentlichen derjenigen des herzustellenden Pizzabodens (A) entspricht; wobei zwischen dem Rahmen (3) und dem Schieber (4) mindestens ein zentrales Antriebselement (8) angebracht ist, ausgebildet zur vertikalen Translation des zentralen Körpers (6) zwischen einer ersten Anordnung maximalen Abstands von der tragenden Oberfläche (2) und einer zweiten Anordnung minimalen Abstands von der tragenden Oberfläche (2), und mindestens zwei äußere Antriebselemente (9), ausgebildet zur vertikalen Translation der Außenkante eines entsprechenden Plättchens (7) zwischen einer ersten Anordnung maximalen Abstands von der tragenden Oberfläche (2) und einer zweiten Anordnung minimalen Abstands von der tragenden Oberfläche (2).

2. Die Vorrichtung gemäß Anspruch 1, **dadurch gekennzeichnet, dass** die benachbarten radialen Plättchen (7) mehrere sind.

3. Die Vorrichtung gemäß einem oder mehreren der obigen Ansprüche, **dadurch gekennzeichnet, dass** der im Wesentlichen planare zentrale Körper (6) eine im Wesentlichen kreisförmige Kontur hat, wobei die mindestens zwei benachbarten radialen Plättchen (7) wie Kreissektoren mit einem Außendurchmesser geformt sind, der dem Durchmesser des inneren Teils des herzustellenden Pizzabodens (A) entspricht, begrenzt durch eine Umfangskruste aus Teig (C).

4. Die Vorrichtung gemäß Anspruch 1, **dadurch gekennzeichnet, dass** das mindestens eine zentrale Antriebselement (8) und die mindestens zwei äußeren Antriebselemente (9) von einer Art sind, die vorzugsweise gewählt ist aus Pneumatikzylindern, Hydraulikzylindern, elektrisch angetriebenen Bewegungsmitteln und Kombinationen davon.

5. Die Vorrichtung gemäß einem oder mehreren der obigen Ansprüche, **dadurch gekennzeichnet, dass** der Schieber (4) starr mit einer Scheibe (10) gekoppelt ist, die mit dem Rahmen (3) gekoppelt ist über Mittel (11) zur Anpassung einer Position der Scheibe, zumindest vertikal, mit Bezug auf die mindestens eine tragende Oberfläche (2), auf die eine vordefinierte Menge an Teig (B) aufgetragen werden kann.

6. Die Vorrichtung gemäß einem oder mehreren der obigen Ansprüche, **dadurch gekennzeichnet, dass** der Schieber (4) eine Aufstandsfläche hat, deren Quermaß kleiner ist als 1000 mm, vorzugsweise kleiner als 500 mm, wobei das Quermaß bestimmt ist durch die äußere Umfangskante der mindestens zwei benachbarten radialen Plättchen (7).

7. Ein Verfahren zum Formen von Pizzaböden (B), das besteht in der Nutzung einer Vorrichtung (1) gemäß einem oder mehreren der obigen Ansprüche und im Ausführen der folgenden Schritte:
- Auftragen einer vordefinierten Menge Teig (B) auf die mindestens eine tragende Oberfläche;
- Betätigen des mindestens einen zentralen Antriebselements (8) zur Translation des im Wesentlichen planaren zentralen Körpers (6) zu der Oberfläche (2) hin, mit daraus folgender Kompression eines zentralen Teils der vordefinierten Menge Teig (B), bis die vordefinierte Menge Teig auf eine vordefinierte Dicke gebracht wird, wobei Bereiche, die an den zentralen Teil des Teigs (B) angrenzen, einer Kompression unterzogen werden, die progressiv von dem zentralen Körper (6) fort abnimmt, durch die Wirkung von Teilen der Plättchen (7), die an den zentralen Körper (6) angrenzen und gelenkig damit verbunden sind;
- Betätigen der äußeren Antriebselemente (9) zur Rotation der Plättchen (7) zu der Oberfläche (2) hin, mit daraus folgender Kompression der äußeren Teile der vordefinierten Menge Teig (B), bis sie auf eine vordefinierte Dicke gebracht wird und so ein Überfließen von Teig über die Umfangskante der Druckplatte (5) hinaus erzeugt wird, die dazu bestimmt ist, eine Teigkruste (C) zu bilden, welche sich in Umfangsrichtung zum Boden (A) befindet.

8. Das Verfahren gemäß Anspruch 7, **dadurch gekennzeichnet, dass** der Teig (B) vom Typ mit hoher Wasseranlagerung ist und eine Menge an Wasser, bezogen auf das Mehl, gleich mindestens 55 Gewichtsprozent, vorzugsweise mehr als 65 Gewichtsprozent, umfasst.

9. Eine Einheit zur Herstellung von Pizzen von der Art, die Folgendes umfasst: mindestens eine Mischvorrichtung zur Herstellung eines Lebensmittelteigs (B), mindestens einen Aufbau zum Teilen des Teigs (B) in vordefinierte separate Einheiten, mindestens eine Vorrichtung zum Transfer der vordefinierten Einheiten von Teig (B), mindestens eine Station zur Verteilung spezifischer Füllungen auf Pizzaböden (A), die aus den vordefinierten Einheiten von Teig (B) geformt wurden, und einen Wärmebehandlungsaufbau, gewählt aus einem Ofen, einem Schockkühler, einem Gefrierschrank und dergleichen; **dadurch gekennzeichnet, dass** sie zwischen der mindestens einen Transfervorrichtung und der mindestens einen Füllungs-Verteilstation eine Vorrichtung (1) gemäß mindestens einem der Ansprüche 1 bis 6 umfasst.

## Revendications

1. Dispositif pour former des fonds de pizza (A) du type comprenant au moins une surface d'appui (2) sur laquelle peut être déposée une quantité prédéfinie de pâte (B), au moins une surface (2) surmontée d'un cadre de support respectif (3) pour au moins un poussoir (4) destiné à aplatir ladite quantité de pâte (B) et à l'étaler, ledit poussoir (4) comprenant une plaque de pression (5), comprenant une gaine de recouvrement (5a) pour ladite plaque de pression (5), la face de ladite gaine (5a) qui est dirigée vers l'extérieur étant apte à venir en butée contre la quantité prédéfinie de ladite pâte (B), et qui est constituée par un corps central sensiblement plan (6), avec une empreinte ayant une dimension transversale inférieure à 150 mm, auquel sont articulés les sommets d'au moins deux lamelles radiales contiguës (7), leurs bords extérieurs formant un contour qui correspond sensiblement à celui de la base de pizza (A) à fournir, entre ledit cadre (3) et ledit poussoir (4) étant interposé au moins un actionneur central (8), configuré pour la translation verticale dudit corps central (6) entre une première configuration de distance maximale par rapport à ladite surface d'appui (2) et une deuxième configuration de distance minimale par rapport à ladite surface d'appui (2), et au moins deux actionneurs externes (9), configurés pour la translation verticale du bord extérieur d'une lamelle respective (7) entre un premier agencement de distance maximale par rapport à ladite surface d'appui (2) et un deuxième agencement de distance minimale par rapport à ladite surface d'appui (2).

2. Le dispositif selon la revendication 1, **caractérisé en ce que** lesdites lamelles radiales contiguës (7) sont en pluralité.

3. Le dispositif selon une ou plusieurs des revendications précédentes, **caractérisé en ce que** ledit corps central sensiblement plan (6) a un contour sensiblement circulaire, lesdites au moins deux lamelles radiales contiguës (7) ayant la forme de secteurs circulaires dont le diamètre extérieur correspond au diamètre de la partie interne du fond de pizza (A) à fournir, délimité par une croûte périmétrique de pâte (C).

4. Dispositif selon la revendication 1, **caractérisé en ce que** ledit au moins un actionneur central (8) et lesdits au moins deux actionneurs externes (9) sont d'un type choisi de préférence parmi des vérins pneumatiques, des vérins hydrauliques, des moyens de déplacement à commande électrique et des combinaisons de ceux-ci.

5. Dispositif selon une ou plusieurs des revendications précédentes, **caractérisé en ce que** ledit poussoir (4) est couplé de manière rigide à un panneau (10) qui est couplé audit cadre (3) grâce à des moyens (11) permettant de régler la position du panneau, au moins en hauteur, par rapport à la au moins une surface d'appui (2) sur laquelle une quantité prédéfinie de pâte (B) peut être déposée.

6. Dispositif selon une ou plusieurs des revendications précédentes, **caractérisé en ce que** ledit poussoir (4) a une empreinte dont la dimension transversale est inférieure à 1000 mm, de préférence inférieure à 500 mm, ladite empreinte transversale étant définie par le bord périphérique extérieur desdites au moins deux lamelles radiales contiguës (7).

7. Procédé pour former des fonds de pizza (B) qui consiste à adopter un dispositif (1) selon une ou plusieurs des revendications précédentes et à effectuer les étapes suivantes :
- disposer une quantité prédéfinie de pâte (B) sur la au moins une surface d'appui ;
- actionner ledit au moins un actionneur central (8) pour une translation dudit corps central sensiblement plan (6) vers ladite surface (2), avec pour conséquence une compression d'une partie centrale de ladite quantité prédéfinie de pâte (B) jusqu'à ce que ladite quantité prédéfinie de pâte soit amenée à une épaisseur définie, les régions contiguës à ladite partie centrale de ladite pâte (B) étant soumises à une compression qui diminue progressivement à mesure que l'on s'éloigne dudit corps central (6) grâce à l'action des parties desdites lamelles (7) qui sont proches dudit corps central (6) et qui y sont articulées ;
- actionner lesdits actionneurs externes (9) pour faire tourner lesdites lamelles (7) vers ladite surface (2), avec pour conséquence la compression des parties externes de ladite quantité prédéfinie de pâte (B) jusqu'à ce qu'elle atteigne une épaisseur prédéterminée, produisant un écoulement de pâte au-delà du bord périphérique de ladite plaque de pression (5) qui est destiné à former une croûte (C) de pâte qui est disposée de manière périphérique par rapport au fond (A).

8. Procédé selon la revendication 7, **caractérisé en ce que** ladite pâte (B) est du type à forte hydratation, comprenant une quantité d'eau, par rapport à la farine, égale à au moins 55 % en poids, de préférence supérieure à 65 % en poids.

9. Unité pour la fabrication de pizzas, du type comprenant au moins un mélangeur pour fournir une pâte alimentaire (B), au moins un ensemble pour diviser ladite pâte (B) en quantités distinctes prédéfinies, au moins un appareil pour le transfert desdites quantités prédéfinies de pâte (B), au moins une station pour la distribution de garnitures spécifiques sur des fonds de pizza (A) obtenus à partir desdites quantités prédéfinies de pâte (B) et un ensemble de traitement thermique choisi parmi un four, un refroidisseur rapide, un congélateur et similaires, **caractérisée en ce qu'**elle comprend, interposé entre ledit au moins un appareil de transfert et ladite au moins une station de distribution de garnitures, un dispositif (1) selon au moins l'une des revendications 1 à 6.
